Europäisches Patentamt

European Patent Office

Office européen des brevets

(11) Publication number: **0 214 539 B1**

# EUROPEAN PATENT SPECIFICATION

(45) Date of publication of patent specification: **28.10.92** (51) Int. Cl.⁵: **G11B 7/24**, G11B 7/26

(21) Application number: **86111697.8**

(22) Date of filing: **23.08.86**

(54) **Optical recording medium.**

(30) Priority: **02.09.85 JP 193468/85**

(43) Date of publication of application:
**18.03.87 Bulletin 87/12**

(45) Publication of the grant of the patent:
**28.10.92 Bulletin 92/44**

(84) Designated Contracting States:
**DE FR GB NL**

(56) References cited:
**EP-A- 0 133 684
US-A- 4 411 963
US-A- 4 524 106
US-A- 4 552 820**

**PATENT ABSTRACTS OF JAPAN, unexamined applications, P field, vol. 7, no. 78, 31 March 1983 THE PATENT OFFICE JAPANESE GOVERNMENT, page 160 P 188**

**PATENT ABSTRACTS OF JAPAN, unexamined applications, P field, vol. 9, no. 156, 29 June 1985 THE PATENT OFFICE JAPANESE GOVERNMENT, page 51 P 368**

**PATENT ABSTRACTS OF JAPAN, unexamined applications, P field, vol. 7, no. 286, 21**

**December 1983 THE PATENT OFFICE JAPANESE GOVERNMENT, page 148 P 244**

(73) Proprietor: **Kao Corporation
1-14-10, Nihonbashi Kayaba-cho
Chuo-ku Tokyo(JP)**

(72) Inventor: **Kishine, Nobuyuki
1022-88 Himurocho
Utsunomiya-shi Tochigi(JP)**
Inventor: **Yamauchi, Michihide
117-106, Shindachi Makino
Sennan-shi, Osaka(JP)**
Inventor: **Nomoto, Katsunori
3-7, Higashi Shukugo 5-chome
Utsunomiya-shi Tochigi(JP)**
Inventor: **Imamura, Tetsuya
34-18, Higashi Yukigaya 2-chome
Ohta-ku Tokyo(JP)**

(74) Representative: **Sparing Röhl Henseler Patentanwälte European Patent Attorneys
Rethelstrasse 123
W-4000 Düsseldorf 1(DE)**

EP 0 214 539 B1

**Description**

The present invention concerns the usage of a carbon material having the surface thereof polished as a recording layer.

EP-A-0 133 684 concerns the usage of a carbon material having the surface thereof polished as a substrate for a magnetic recording medium. This substrate is provided with a thin film of magnetic material as the recording layer.

Optical recording media such as optical discs are generally provided with a thin recording layer on a substrate which allows optical recording/reproducing of data. In order to record data on such a recording layer, the layer is subjected to either optical or thermal energy such as laser beam radiation modulated with data signals to form small optically detectable pits of several nm to 1 $\mu$m. These recorded data are reproduced by scanning the recording tracks with a laser beam to detect optical changes between the portions which are formed or not formed with such pits. These optical recording/reproducing systems are advantageous because the pickup does not physically contact the recording medium when data are recorded/reproduced or erased, and they are free of abrasion, and can be used for high speed retrieval of stationary images. They are currently in the process of commercial application as a stationary image file, a document file or a data file.

As the materials for the recording layer of such an optical recording medium, there have been used in the prior art magnetic thin films such as those of tellurium (Te), or tellurium-selenium (Te-Se), of oxides of tellurium, germanium, molybdenum, etc. (TeOx, GeOx, MoOx), of gadolinium-terbium-iron (Gd-Tb-Fe), and of gadolinium-cobalt (Gd-Co).

In order to record data on such magnetic thin film, a laser beam is emitted upon the thin film to locally raise the temperature, and at the same time a magnetic field is effective from outside to invert magnetization on the heated portion. This magnetically forms inverted regions in correspondence with desired data signals to be recorded. In order to reproduce the data, a laser beam is emitted onto the recording medium and either the Kerr effect of the light reflected therefrom or the Faraday effect of the light transmitted therethrough is used for data retrieval. These recording/reproducing systems are called photomagnetic recording/reproducing system.

Organic resins, glass, quartz, ceramics, etc. are used as the substrate for such optical recording medium. The recording density on the medium, however, is as small as 10 mega bits/cm$^2$ in the photomagnetic recording/ reproducing system. It further requires polarized laser beam radiation which has been passed through a polarizer or an analyzer for recording/reproducing data. The system is thus not quite satisfactory in the output level of the optical detector and in signal/noise ratio when put into practice.

Thin films containing tellurium or those of oxides cannot be used repeatedly by writing data, erasing written data and rewriting another data again. But they can be recorded in a density as high as 250 mega bits/cm$^2$. Such thin films require a laser unit of higher output for heating by laser beam radiation because they have low absorptivity of light energy. The writing system inconveniently becomes large in size. Moreover, as tellurium and selenium are toxic and unstable, the time interval over which the medium can store data is short so that their use as a data file is limited to particular cases.

As glass, quartz and ceramics have high densities, substrates made of these material need a large driving unit. As they are brittle, they present problems in safety as well as in workability. Organic resins, on the other hand, are relatively lightweight and can be manufactured easily, but their heat resistance is as low as 70 - 130°C, and they are highly hygroscopic. These properties of organic resins create difficulties when the recording density is to be enhanced further.

The object of the present invention is to provide an optical recording medium which can be recorded at high density, which is lightweight, which has a high heat resistance, which has no toxicity and which is highly stable.

The object is solved by the usage of a carbon material having the surface thereof polished as a recording layer of an optical recording medium comprising a substrate and said recording layer formed on said substrate which is capable of recording data in the form of detectable changes when it is subjected to optical or thermal energy modulated with data signals and of reproducing such recorded data in the form of optical changes.

The substrate and the recording layer are preferably made of the same carbon material. The subjection of the recording layer with energy modulated data signals may be provided by a laser beam. The reproduction of optically recorded data may be provided by measuring the intensity ratio R = $I_{1580}/I_{1360}$, wherein the Raman spectrum intensity at 1360 cm$^{-1}$ is expressed as $I_{1360}$ and that at 1580 cm$^{-1}$ as $I_{1580}$. The optical recording medium may be a disk.

The carbon materials therein comprise carbon per se or the material containing carbon as major

2

constituent such as graphite of high orientation and crystallinity, coke, glass-like carbon which has been confirmed as amorphous by radiographic analysis, or carbon black formed of ultrafine particles. It is particularly desirable to use glass-like carbon materials. Glass-like carbon materials have such advantageous features that they are not easily abrased to powder when they slidably contact with another object, are easy to mirror-finish, and have remarkable changes in "intensity ratio R" to be described hereinafter.

The glass-like carbon materials may be glass-like carbon obtained by carbonizing a thermosetting resin, glass-like carbon obtained by carbonizing resins which have been modified by co-polymerization or copoly-condensation for thermosetting, glass-like carbon obtained by chemically preventing crystallization in the process of setting or carbonizing, and glass-like carbon obtained by thermally decomposing low molecule hydrocarbons such as methane, ethylene, or benzene in gaseous phase, and specifically glass-like carbons of polyacrylonitrile group, of rayon type, of pitch type, of lignin group, of phenol group, of furan group, of alkyd resin group, of unsaturated polyester group, or of xylene resin group.

It is known that the Raman spectrum appears at 1580 $cm^{-1}$ generally on carbon materials. In other words, light having the wavelength equivalent to the energy smaller than the emitted laser beam by 1580 $cm^{-1}$ is scattered. When the surface of such carbon material is polished highly reactive structural defects are caused to immediately form oxides on the surface. This causes Raman spectrum of 1360 $cm^{-1}$ which were not detected before polishing to appear. When such a surface is heated with laser beam radiation, the intensity of the Raman spectrum of 1360 $cm^{-1}$ was found to decrease. This makes it possible to write data by heating with laser beam a carbon material having polished surface, and to read-out data by measuring the Raman spectrum of 1360 $cm^{-1}$. In other words, such carbon materials can be used as the material of optical recording medium. In practice, writing data is conducted with radiation of a laser beam of 15 - 20 mW output and reading-out thereof is conducted by measuring the intensity ratio R of Raman spectrum of 1360 $cm^{-1}$ against the Raman spectrum of 1580 $cm^{-1}$. It was revealed that the dimension of the region where the intensity of Raman spectrum of 1360 $cm^{-1}$ decreases is sufficiently small or in the order of about 1.2 times as much as the diameter of the laser beam used for writing. Recording of data at high density is thus possible.

When the portion where data had been written is heated, the portion was found to return to the initial stage before writing. The invention therefore provides an optical recording medium which can be erased or re-written with data.

As the substrate of this invention medium is made of a carbon material, it is lightweight and stable thermally as well as chemically.

Laser beam is used to read and write of data on the optical recording medium according to this invention. The source of laser beam may be laser units of neon, helium-cadmium, argon, helium-neon, or ruby.

The optical recording medium according to this invention is lightweight and stable thermally and chemically, and capable of high density recording as well as erasing of once written data or re-writing data thereon. As the substrate and recording layer can be made of the same material, the manufacturing process thereof can be remarkably simplified. As the medium itself is extremely light in weight, the unit for driving such optical recording medium can be reduced in weight as well as size.

Detailed Description of the Invention:

Examples of this invention will now be described. Although an optical recording medium in the form of a disc is exemplified in the following examples, optical recording medium in the form of a card or of any other shape may be used to embody this invention. The following examples are described to illustrate this invention and are not meant to limit the technical scope thereof in any way.

Example 1

The surface of a disc made of glass-like carbon of furan group was roughly ground with alumina powder of 1 $\mu$m diameter and then polished to achieve mirror finish with alumina powder of 0.25 $\mu$m diameter to obtain an optical recording medium.

Example 2

Instead of the glass-like carbon used in Example 1, an artificial graphite disc was used, ground in the manner similar to Example 1 and prepared as an optical recording medium.

Test Example

The surfaces of the optical recording media obtained in Examples 1 and 2 were irradiated with helium-neon laser beam of 20 mW output for 2 ms by focusing the beam into ca. 1 $\mu$m diameter with an optical lens and written with data. The portion irradiated with the laser beam will be referred to as the recorded portion and the portions other than that is referred to as the unrecorded portion hereinbelow. The recorded and unrecorded portions were then irradiated with argon laser beam focused in 1.5 $\mu$m diameter and the intensity ratio R in Raman spectra were measured. The intensity ratio R can be defined as

$$R = I_{1580}/I_{1360}$$

wherein the Raman spectrum intensity at 1360 cm$^{-1}$ is expressed as $I_{1360}$ and that at 1580 cm$^{-1}$ is as $I_{1580}$. After such measurement of intensity ratio R, the optical recording media were heated to 150°C in the atmosphere and then the intensity ratio R on their recorded portions was measured again. The result of the measurement is shown in the Table.

As is clearly known from the Table, the intensity ratio R shows a remarkable difference between the recorded portion and the unrecorded portion, indicating that the material is suitable for data recording/reproducing. When heated, data recorded on the material are erased and the recorded portion returns to the initial status. This indicates that the optical recording medium according to this invention allows erasing of once written data and re-writing new data.

Table

| | Intensity Ratio R | | |
|---|---|---|---|
| | Recorded Portion | Unrecorded Portion | Recorded Portion After Heating |
| Example 1 | 1.0 | 0.2 | 0.2 |
| Example 2 | 3.1 | 1.2 | 1.2 |

**Claims**

1. Usage of a carbon material having the surface thereof polished as a recording layer of an optical recording medium comprising a substrate and said recording layer formed on said substrate which is capable of recording data in the form of detectable changes when it is subjected to optical or thermal energy modulated with data signals and of reproducing such recorded data in the form of optical changes.

2. The usage of claim 1, wherein the substrate and the recording layer are made of the same carbon material.

3. The usage of claim 1 or 2, wherein the carbon material is glass-like carbon.

4. The usage of anyone of the claims 1 to 3, wherein the subjection of the recording layer with energy modulated data signals is provided by a laser beam.

5. The usage of anyone of the claims 1 to 4, wherein the reproduction of optically recorded data is provided by measuring the intensity ratio

$$R = I_{1580}/I_{1360}$$

wherein the Raman spectrum intensity at 1360 cm$^{-1}$ is expressed as $I_{1360}$ and that at 1580 cm$^{-1}$ as $I_{1580}$.

6. The usage of anyone of the claims 1 to 5, wherein the optical recording medium is a disk.

**Patentansprüche**

1. Verwendung eines Kohlenstoffmaterials, dessen Oberfläche poliert ist, als Aufzeichnungsschicht eines optischen Aufzeichnungsmediums, umfassend ein Substrat und enthaltendes Aufzeichnungsmedium und die besagte, auf dem besagten Substrat ausgebildete Aufzeichnungsschicht, die in der Lage ist, Daten in Form von detektierbaren Änderungen aufzuzeichnen, wenn sie optischer oder thermischer Energie, moduliert mit Datensignalen, ausgesetzt wird, und so aufgezeichnete Daten in Form von optischen Änderungen lesbar zu machen.

2. Verwendung nach Anspruch 1, wobei das Substrat und die Aufzeichnungsschicht aus dem gleichen Kohlenstoffmaterial hergestellt sind.

3. Verwendung nach Anspruch 1 oder 2, wobei das Kohlenstoffmaterial glasartiger Kohlenstoff ist.

4. Verwendung nach einem der Ansprüche 1 bis 3, wobei die Unterwerfung der Aufzeichnungsschicht mit energiemodulierten Datensignalen durch einen Laserstrahl vorgenommen wird.

5. Verwendung nach einem der Ansprüche 1 bis 4, wobei das Lesen optisch aufgezeichneter Daten durch Messen des Intensitätsverhältnisses

$$R = I_{1580}/I_{1360}$$

vorgenommen wird, wobei die Ramanspektrumintensität bei 1360 $cm^{-1}$ als $I_{1360}$ und bei 1580 $cm^{-1}$ als $I_{1580}$ ausgedrückt ist.

6. Verwendung nach einem der Ansprüche 1 bis 5, wobei das optische Aufzeichnungsmedium eine Platte ist.

**Revendications**

1. Utilisation d'un matériau carboné dont la surface a été polie pour former la couche d'enregistrement d'un milieu d'enregistrement optique constituant à la fois un substrat et cette couche d'enregistrement formée sur ce substrat, qui est capable d'enregistrer de l'information sous la forme de changements détectables lorsqu'il est exposé à de l'énergie optique ou thermique modulée par des signaux d'information, et de reproduire l'information ainsi enregistrée sous la forme de changements optiques.

2. Utilisation selon la revendication 1, dans laquelle le substrat et la couche d'enregistrement sont faits du même matériau carboné.

3. Utilisation selon la revendication 1 ou 2. dans laquelle le matériau carboné est du carbone vitreux.

4. Utilisation selon l'une quelconque des revendications 1 à 3, dans laquelle l'exposition de la couche d'enregistrement à de l'énergie modulée par des signaux d'information, est réalisée au moyen d'un faisceau laser.

5. Utilsation selon l'une quelconque des revendications 1 à 4, dans laquelle la reproduction de l'information enregistrée optiquement, s'effectue par la mesure du rapport d'intensités

$$R = I_{1580}/I_{1360}$$

où l'intensité du spectre Raman à 1360 $cm^{-1}$ est désignée par $I_{1360}$ et l'intensité du spectre Raman à 1580 $cm^{-1}$ est désignée par $I_{1580}$.

6. Utilisation selon l'une quelconque des revendications 1 à 5, dans laquelle le milieu d'enregistrement optique est un disque.